# EUROPEAN PATENT SPECIFICATION

(11) **EP 0 575 452 B1**
(45) Date of publication and mention of the grant of the patent: **17.06.1998**
(21) Application number: 92907158.7
(22) Date of filing: 06.03.1992
(51) Int. Cl.: C12P 21/06, A23J 3/14, A23J 3/16

(54) **METHOD FOR PRODUCTION OF A VEGETABLE PROTEIN HYDROLYZATE**
METHODE ZUR HERSTELLUNG EINES PROTEINHYDROLYSATS AUS GEMÜSE
PROCEDE DE PRODUCTION D'UN HYDROLYSAT DE PROTEINE VEGETALE

(30) Priority: 07.03.1991 EP 91610013
(43) Date of publication of application: 29.12.1993
(73) Proprietor: NOVO NORDISK A/S, 2880 Bagsvaerd (DK)
(72) Inventor: NIELSEN, Per, Munk, DK-3400 Hillerod (DK); ERIKSEN, Svend, DK-3450 Allerod (DK); HANSEN, Ole, Regnar, DK-2730 Herlev (DK); KRISTENSEN, Svend, Erik, DK-3500 Voerlose (DK); HVASS, Peter, DK-2800 Lyngby (DK)
(86) International application number: DK9200068
(87) International publication number: WO9215696

(56) References cited:
- US-A- 4 324 805
- US-A- 4 431 629
- US-A- 4 482 574
- US-A- 4 959 350

## Description

The invention comprises a method for production of a vegetable protein hydrolyzate.

Methods of this kind usually comprise a hydrolysis and a posttreatment in order to purify the protein hydrolyzate. An example of the hydrolysis appears from US 4,324,805 and 4,100,024, and an example of the posttreatment appears from American Chemical Society Symposium No. 154, Synthetic Membranes, Vol. II, Hyper- and Ultrafiltration Uses.

Many methods for production of a protein hydrolyzate with good organoleptic properties can be carried out with a low yield only. Thus, it is the purpose of the invention to indicate a method for production of a protein hydrolyzate with good organoleptic properties, which can be carried out with a relatively high yield.

Surprisingly, according to the invention it has been found that a certain combination of a non-pH-stat hydrolysis and an ultrafiltration provides a process for production of a well tasting and organoleptically acceptable product in high yield.

Thus, the method according to the invention for production of a protein hydrolyzate is characterized by the fact
1) that a vegetable protein product with at least 65% protein calculated as dry matter and water is mixed to a slurry with a protein content up to about 20%, preferably up to 12%,
2) that the mixture from step 1) by means of at least one protease is proteolytically hydrolyzed by means of a non-pH-stat method to a DH of between 15 and 35%,
3) that the hydrolysis is terminated by inactivation of the enzyme(s), and
4) that the mixture from step 3 is separated on an ultrafiltration unit with cut-off value above 5,000, the permeate constituting the protein hydrolyzate.

It is to be understood that the vegetable protein product used as raw material in step 1 can be any vegetable protein product, e.g. soy protein, sesame protein, pea protein, rice protein, rape seed protein, and faba bean protein, provided that the protein content thereof is at least 65% calculated as dry matter, i.e. vegetable protein concentrates (with a protein content of above 70% calculated as dry matter), or vegetable protein isolates (with a protein content of above 90% calculated as dry matter).

In regard to step 2) it is preferred to conduct the hydrolysis at pH values and temperatures close to the optimum pH values and temperatures for the protease(s).

Also, it is to be understood that step 3) can be omitted, if the enzyme(s) is (are) retained in the retentate of step 4).

A preferred embodiment of the method according to the invention comprises that the vegetable protein product is a vegetable protein concentrate. Vegetable protein concentrates, e.g. soy protein concentrates, are commercially available standard products.

A preferred embodiment of the method according to the invention comprises that the vegetable protein product is a vegetable protein isolate. Vegetable protein isolates, e.g. soy protein isolates, are commercially available standard products of high purity.

A preferred embodiment of the method according to the invention comprises that the vegetable protein is soy, pea or rice protein. These vegetable proteins are available commercially as concentrates.

A preferred embodiment of the method according to the invention comprises that the slurry in step 1) has a protein content of 7.12%. In this manner the equipment is utilized optimally, and also, the viscosity is not too high for handling.

A preferred embodiment of the method according to the invention comprises that a heat treatment to a temperature above 60°C is inserted between step 1 ) and step 2). In this manner the protein is effectively denatured, and thus, the subsequent hydrolysis will proceed rapidly. Also, the microbial stability during the hydrolysis, which can last for several hours, is secured effectively.

A preferred embodiment of the method according to the invention comprises that the hydrolysis in step 2) is carried out to a DH of between 20-30 and that Alcalase® *(B. licheniformis)* and/or Neutrase® *(B. subtilis)* is used as proteolytic enzyme(s). It is especially preferred to use Alcalase® (with a high pH optimum) first, and then Neutrase® (with a lower pH optimum). This method is especially well suited to the non-pH-stat-method used according to the invention.

A preferred embodiment of the method according to the invention comprises that the inactivation of the enzyme(s) (step 3)) is carried out by heat treatmemt. This inactivation is especially well suited in case the pH of the final protein hydrolyzate is supposed to be relatively high.

A preferred embodiment of the method according to the invention comprises that the inactivation of the enzyme(s) (step 3)) is carried out by acid treatment. This inactivation is especially well suited in case the pH of the final protein hydrolyzate is supposed to be relatively low.

A preferred embodiment of the method according to the invention comprises that the mixture at the end of step 3) is treated with activated carbon for more than 5 minutes at between 50 and 70°C in an amount corresponding to between 1 and 5% carbon, calculated in relation to dry matter content. In this manner the color of the final protein hydrolyzate is improved, and also, the off-flavor is removed.

A preferred embodiment of the method according to the invention comprises that the permeate from step 4) is heated to between 130 and 140°C and immediately thereafter flash cooled to around 75°C and then cooled in a heat exchanger to between 50 and 60°C. In this manner the taste of the final protein hydrolyzate is improved, and also, the microbiological stability is secured.

A preferred embodiment of the method according to the invention comprises that after step 4) a concentration is carried out by nanofiltration at a temperature between 50 and 70°C and/or evaporation, whereafter the retentate is collected as the protein hydrolyzate solution. By means of the nanofiltration a desalination can be carried out by proper selection of the membrane; besides nanofiltration is an inexpensive way for removal of water. Evaporation has the advantage of obtaining a high dry matter content in the concentrate before drying.

A preferred embodiment of the method according to the invention comprises that the protein hydrolyzate solution from step 4) is spray-dried to a water content below 6.5%. In this manner a stable product is obtained, both microbially and organoleptically.

Also, the vegetable protein hydrolyzate produced by means of the method according to the invention can be used as a nutrient, preferably as a nutritional additive to foods and beverages. Rat experiments have shown that the gastric emptying as well as absorption of protein from the intestinal tract was considerably faster with soy protein hydrolyzate produced according to the invention than with soy protein concentrate. Reference is made to Examples 6 and 7. Also, the soy protein hydrolyzate produced by means of the method according to the invention is expected to exhibit a beneficial effect on the N balance in humans, in comparison to the unhydrolyzed soy protein.

The method according to the invention will be illustrated in Examples 1-5, and the use of the vegetable protein hydrolyzate produced according to the invention will be illustrated in Examples 6-7.

### EXAMPLE 1

### Production of an acidic hydrolyzate from soy protein concentrate

### Mixing

15 kg of soy protein concentrate Unico 75 (Loders Croklaan) containing 64.9% protein is mixed with water to a slurry with a protein content of 8.0%.

### Heat treatment

The mixture is heated to 85°C and cooled again to 55°C after a holding time of 1 minute.

### Hydrolysis

pH is adjusted to 8.5 with 4 N NaOH. The hydrolysis is carried out at 55°C and is running for 18 hours. Hydrolysis is initiated by addition of Alcalase® 2.4L. The dosage is 2.0% of the amount of protein. pH is monitored and when pH have decreased to < 7.0 Neutrase® 0.5L is added to the mixture. The dosage is 1.0% of the amount of protein.

### Inactivation of enzyme

After 18 hours the hydrolysis is terminated by lowering the pH to 4.2 by means of 30% HCI.

### Separation of hydrolyzate

The mixture is centrifuged to remove undissolved material (protein as well as other components). The supernatant is collected. The sludge from the centrifuge is resuspended to initital volume in order to wash out soluble protein. The suspension is centrifuged. To the supernatant from the two centrifugations activated carbon is added (Picatif FGV120). The dosage is 3% of dry matter measured as Brix. The mixture is ultrafiltered by means of a PCI module mounted with FP100 membranes having a cut-off value of 100,000. The temperature during the ultrafiltration is 55-65°C. The volume of the carbon containing mixture is concentrated to one third and subsequently diafiltrered with two volumes of water. The ultrafiltration is terminated by a concentration step. The permeate is collected and the retentate discarded.

### Flash

The permeate from the ultrafiltration is heated to 135°C by steam injection and flash cooled within few seconds to approx. 75°C followed by cooling to 55°C for further processing.

### Nanofiltration

The effluent from the flash process is concentrated and desalinated by nanofiltration to a dry matter content of approx. 25% (30° Brix). Nanofiltration equipment was AFC30 membranes from PCI Membrane Systems. The low osmolality of 188 mOsm/kg measured at 7.5° Brix was obtained by diafiltration of 190 l of concentrate with 60 l water.

### Sterilzing filtration

To assure appropriate microbiological quality the concentrate from the nanofiltration is filtered at approx. 50°C on Supra EKS sheets rinsed with citric acid solution (50 l/m² at pH 4.2) and deionized water to neutral pH before steaming.

### Spray drying

The filtrate is spray dried at an inlet temperature of 200°C and an outlet temperature of 75°C by means of a spray drying unit from Niro Atomizer with a capacity of approx 2 l of evaporated water per hour.

### EXAMPLE 2

### Production of an acidic hydrolyzate from pea protein isolate

### Mixing

9.6 kg of pea protein isolate (P-pro 2000 Nutrio/Danisco) containing 83.3% protein is mixed with water to a slurry with a protein content of 8.0%.

### Heat treatment

The mixture is heated to 85°C and cooled again to 55°C after a holding time of 1 minute.

### Hydrolysis

pH is adjusted to 8.5 with 4 N NaOH. The hydrolysis is carried out at 55°C and is running for 18 hours. Hydrolysis is initiated by addition of Alcalase® 2.4L. The dosage is 2.0% of the amount of protein. pH is monitored and when pH have decreased to < 7.0 Neutrase® 0.5L is added to the mixture. The dosage is 1.0% of the amount of protein.

### Inactivation of enzyme

After 18 hours the hydrolysis is terminated by lowering the pH to 4.2 by means of 30% HCI.

### Separation of hydrolyzate

To the hydrolyzate activated carbon is added (Picatif FGV120). The dosage is 3% of dry matter measured as Brix. The mixture is ultrafiltered by means of a PCI module mounted with FP100 membranes having a cut-off value of 100,000. The temperature during ultrafiltration is 55-65°C. The volume of carbon containing mixture is concentrated to one third and subsequently diafiltered with two volumes of water. The ultrafiltration is terminated by means of a concentration step. The permeate is collected and the retentate discarded.

### Flash

The permeate from the ultrafiltration is heated to 135°C by steam injection and flash cooled within few seconds to approx. 75°C followed by cooling to 55°C for further processing.

### Nanofiltration

The effluent from the flash process is concentrated and desalinated by nanofiltration to a dry matter content of approx. 25% (30° Brix). Nanofiltration equipment was AFC30 membranes from PCI Membrane Systems. The low osmolality of 180 mOsm/kg measured at 5.0% protein was obtained without diafiltration.

### Sterilizing filtration

To assure appropriate microbiological quality the concentrate from the nanofiltration is filtered at approx. 50°C on Supra EKS sheets rinsed with citric acid solution (50 l/m² at pH 4.2) and deionized water to neutral pH before steaming. 22 kg of filtrate containing 22.0% protein was obtained after this step.

### Spray drying

The filtrate is spray dried at an inlet temperature of 200°C and an outlet temperature of 75°C by means of a spray drying unit from Niro Atomizer with a capacity of approx. 2 1 of evaporated water per hour.

### EXAMPLE 3

### Production of a neutral hydrolyzate from pea protein isolate

### Mixing

9.6 kg of pea protein isolate (P-pro 2000 Nutrio/Danisco) containing 83.3% protein is mixed with water to a slurry with a protein content of 8.0%.

### Heat treatment

The mixture is heated to 85°C and cooled again to 55°C after a holding time of 1 minute.

### Hydrolysis

pH is adjusted to 8.5 with 4 N NaOH. The hydrolysis is carried out at 55°C and is running for 18 hours. Hydrolysis is initiated by addition of Alcalase® 2.4L. The dosage is 2.0% of the amount of protein. pH is monitored and when pH have decreased to < 7.0 Neutrase® 0.5L is added to the mixture. The dosage is 1.0% of the amount of protein.

### Inactivation of enzyme

After 18 hours the hydrolysis is terminated by heating to 85°C, by holding this temperature for 3 minutes, and by cooling to 55°C.

### Separation of hydrolyzate

To the hydrolyzate activated carbon is added (Picatif FGV120). The dosage is 3% of dry matter measured as °Brix. The mixture is ultrafiltered by means of a PCI module mounted with FP100 membranes having a cut-off value of 100,000. The temperature during ultrafiltration is 55-65°C. The volume of carbon containing mixture is concentrated to one third and subsequently diafiltered with two volumes of water. The ultrafiltration is terminated by means of a concentration step. The permeate is collected and the retentate discarded.

### Flash

The permeate from the ultrafiltration is heated to 135°C by steam injection and flash cooled within few seconds to approx. 75°C followed by cooling to 55°C for further processing.

### Nanofiltration

The effluent from the flash process is concentrated and desalinated by nanofiltration to a dry matter content of approx. 25% (30° Brix). Nanofiltration equipment was AFC30 membranes from PCI Membrane Systems. The low osmolality of 161 mOsm/kg measured at 7.5° Brix was was obtained by diafiltration of 176 1 of concentrate with 80 1 of water. The diafiltration was carried out after concentration of the 176 l to 28 l.

### Sterilizing filtration

To assure appropriate microbiological quality the concentrate from the nanofiltration is filtered at approx. 50°C on Supra EKS sheets rinsed with citric acid solution (50 l/m² at pH 4.2) and deionized water to neutral pH before steaming.

### Spray drying

The filtrate is spray dried at an inlet temperature of 200°C and an outlet temperature of 75°C by means of a spray drying unit from Niro Atomizer with a capacity of approx. 2 1 of evaporated water per hour.

### EXAMPLE 4

### Production of a neutral hydrolyzate from pea protein isolate

The effluent from the flash in Example 3 is collected for concentration without desalination, i.e. by evaporation; it is concentrated in a rotary vacuum evaporator to a dry matter content of approx. 25%.

The concentrate is spray dried at an inlet temperature of 200°C and an outlet temperature of 75°C by means of a spray drying unit from Niro Atomizer with a capacity of approx. 2 1 of evaporated water per hour.

### EXAMPLE 5

### Production of a neutral hydrolyzate from rice protein concentrate

### Mixing

442.6 g of rice protein concentrate (REMY Industries, Belgium) containing 72.3% of protein (N*5.95) is mixed with water to a slurry with a protein content of 8.0%.

### Hydrolysis

pH is adjusted to 8.5 with 4 N NaOH. The hydrolysis is carried out at 55°C and is running for 18 hours. Hydrolysis is initiated by addition of Alcalase® 2.4L. The dosage is 2.0% of the amount of protein. pH is monitored and when pH have decreased to < 7.0 Neutrase® 0.5L is added to the mixture. The dosage is 1.0% of the amount of protein.

### Inactivation of enzyme

After 18 hours the hydrolysis is terminated by heating to 85°C by holding this temperature for 3 minutes, and by cooling to 55°C.

### Separation of hydrolyzate

The hydrolyzate is centrifuged to remove suspended material. The supernatant is ultrafiltered by means of a Milipore lab module mounted with membranes having a cut-off value of 10,000. The temperature during the ultrafiltration is 25°C. The permeate is collected and the retentate discarded.

### Nanofiltration

The effluent from the flash process is concentrated and desalinated by nanofiltration to a dry matter content of approx. 25% (30° Brix). Nanofiltration equipment was a Milipore lab module mounted with RO Membranes. The product is obtained as a nanofiltration concentrate.

In order to generate a better survey of all 5 examples reference is made to the below indicated table.

| | Ex. 1 | Ex. 2 | Ex. 3 | Ex. 4 | Ex. 5 |
|---|---|---|---|---|---|
| **Parameters of processing** | | | | | |
| DH in hydrolysis, % | 22.6 | 25.3 | 25.8 | 25.8 | 17.6 |
| Increase in osmolality during hydrolysis mOsm/kg | 209 | 183 | 182 | 182 | 164 |
| | | | | | |

| **Properties of end product** | | | | | |
|---|---|---|---|---|---|
| DH of product, % | 27.1 | 27.6 | 28.5 | 30.9 | 21.4 |
| pH of product | | | | | |
| (in solution with 5% protein) | 4.14 | 4.03 | 6.53 | 6.98 | 6.83 |
| Osmolality of product, mOsm/kg | | | | | |
| (in solution with 5% protein) | 195 | 180 | 150 | 172 | 153 |
| Protein content, % (N*6.25) | 77.1 | 89.8 | 91.2 | 89.0 | 7.8*) |
| Dry matter, % | 94.9 | 94.0 | 95.3 | 94.5 | 9.6 |
| Protein in d.m., % | 81.3 | 95.5 | 95.7 | 94.2 | 81.3 |

| **Application of end product** | | | | | |
|---|---|---|---|---|---|
| Dietary drinks with pH < 4.5 | + | + | - | - | - |
| | | | | | |
| Protein supplements, soft drinks | | | | | |
| drinks with pH < 4.5 | + | + | - | - | - |
| | | | | | |
| Protein fortification of soups, | | | | | |
| fonds etc | - | - | + | + | + |
| | | | | | |
| Dietary drinks at neutral pH | - | - | + | + | + |

| | | | | | |
|---|---|---|---|---|---|
| *) Example 5 calculated as N*5.95 | | | | | |

### EXAMPLE 6

This example was designed to evaluate the gastrointestinal disappearance of soy protein concentrate, soy protein hydrolysate and a mixture of amino acids after gastric intubation in rats, maltodextrin being used as a control.

### Test compounds

Four different test compounds were used for the study: .
1. Soy protein concentrate (Unico 75, % of protein = 66.6)
2. Soy protein hydrolysate produced as indicated in Example 1 (Pro up, % of protein = 79.1)
3. Vaminolac (mixture of amino acids, % of protein = 85.9)
4. Maltodextrin CPC 1908

### Preparation of test compounds

Of each of the four test compounds a dose formulation was prepared by adding 0.9% sodium chloride solution to 3.5 g of the test compound until a volume of 17.5 ml.

### Animals

Twenty male SPF rats (200 - 250 g) of the stock Mol:WIST from the Møllegaard Breeding Centre ApS, Ejby, DK-4623 U. Skensved, Denmark were used. Before dosing with the test compound, each rat had been starved for 24 hours. In order to prevent eating of bedding material, each rat was, while starved, kept in a cage with a wire grid floor.

### Surgical preparation and dosing

Each rat was anaesthetized with an intraperitoneal dose (0.5 ml) of a short acting barbiturate (Brietal®).

Via an abdominal incision a ligature was placed at the ileum just before entering the large intestines. The incision was closed conventionally.

Immediately after the surgical preparation a volume of 2.5 ml of the test compound preparation was administered by gastric intubation with a blunt cannula.

Five rats were used for each of the preparations of the test compounds:

### Collection of gastrointestinal contents

One hour after dosing, the rats were sacrificed and three peans were applied via the abdominal recision, one at the oesophagus just before entrance to the stomach and two at the gastroduodenal edge.

The ligated stomach and small intestines were flushed with 10 ml of 0.9% NaCI, which was collected in small plastic bottles.

Each bottle was analysed for content of protein (Kjeldahl analysis).

The results obtained are summarized in Table 1.

**Table 1**

| Protein in stomach and small intestines of rats one hour after gastric intubation of maltodextrin, soy protein concentrate, soy protein hydrolysate and Vaminolac (amino acid mixture), 5 rats being used for each test compound | | | | | | | | |
|---|---|---|---|---|---|---|---|---|
| | Dose*) | Stomach | | Intestine | | Total | | Absorbed |
| Treatment | g (found) | g | % of dose | g | % of dose | g | % of dose | % of dose |
| Maltodextrin | - | 0.02 | - | 0.04 | - | 0.06 | - | |
| Soy protein concentrate | 0.29 | 0.23 | 79.3 | 0.06 | 20.7 | 0.30 | 103.4 | ∼ 21 |
| Soy protein hydrolysate | 0.37 | 0.17 | 45.9 | 0.08 | 21.6 | 0.26 | 70.3 | ∼ 49 |
| Vaminolac | 0.40 | 0.15 | 37.5 | 0.06 | 15.0 | 0.21 | 53.0 | ∼ 62 |

| | | | | | | | | |
|---|---|---|---|---|---|---|---|---|
| *) Protein in 2.5 ml dose formulation | | | | | | | | |

In control animals (maltodextrin) very little protein (0.02 g) was found in the stomach. In the intestine 0.04 g of protein was found.

In the protein treated rats, the higher amount of stomach protein was found in the rats given soy protein concentrate (79.3% of the dose) and the lowest in the rats given Vaminolac (37.5% of the dose).

In all three groups of rats treated with protein, the amounts of protein in the intestine was about the same (0.06 - 0.08 g) and only very little higher than the content in the control rats.

This example shows that the stomach is emptying its content of protein relatively slowly after a gastric dose of soy protein concentrate. As little as 21% had disappeared from the stomach and intestine one hour after dosing. The emptying was considerably faster after the gastric dose of soy protein hydrolysate (about 49% had disappeared) and even faster after the gastric dose of Vaminolac (about 62% had disappeared). The amino acid mixture, however, is very expensive and tastes extremely bad. Thus, everything taken into consideration, the soy protein hydrolysate produced by means of the method according to the invention is the preferred nutrient.

The protein content of the small intestines was at the same level for all 3 protein products as in the control rats. Thus, the proteins emptied into the small intestines seem to be absorbed so readily that the intestinal content did not increase above the background level of control rats.

The results have shown that about 50% of the administered soy protein hydrolysate is absorbed within one hour in comparison to about 20% for soy protein concentrate and 62% for amino acid mixture, respectively.

Since gastric emptying was considerably faster after soy protein hydrolysate than after soy protein concentrate and all the proteins emptied into the intestines seem to be quickly absorbed, it is concluded that utilization of soy protein hydrolysate is quicker than utilization of soy protein concentrate, the reason being differences in gastric emptying rates.

### EXAMPLE 7

This example was designed to evaluate the gastrointestinal disappearance of soy protein concentrate, soy protein hydrolysate and a mixture of amino acids after intraintestinal administration in rats.

### Test compounds

Four different test compounds were used for the study:
1. Soy protein concentrate (Unico 75, % of protein = 62.8)
2. Soy protein hydrolysate produced as indicated in Example 1 (Pro up, % of protein = 82.54)
3. Vaminolac (mixture of amino acids, % of protein = 84.5)
4. Maltodextrin CPC 1908

### Preparation of test compounds

Of each of the four test compounds a dose formulation was prepared by adding 0.9% sodium chloride solution to 1.6 g of the test compound until a volume of 20.0 ml.

### Animals

Twenty male SPF rats (about 150 g) of the stock Mol:WIST from the Møllegaard Breeding Centre ApS, Ejby, DK-4623 U. Skensved, Denmark were used. Before dosing with the test compound, each rat had been starved for 24 hours. In order to prevent eating of bedding material, each rat was, while starved, kept in a cage with a wire grid floor.

### Surgical preparation and dosing

Each rat was anaesthetized with an intraperitoneal dose (0.5 ml) of a short acting barbiturate (Brietal®).

Via an abdominal incision a ligature was placed at the gastroduodenal edge and at the ileum just before entering the large intestines. The incision was closed conventionally.

Immediately after the application of the ligatures a volume of 2.5 ml of the test compound preparation was administered by injection into the duodenum.

Five rats were used for each of the preparations of the test compounds:

### Collection of intestinal contents

One hour after dosing, the rats were sacrificed.

The ligated small intestines were flushed with 10 ml of 0.9% NaCI, which was collected in small plastic bottles.

Each bottle was analysed for content of protein (Kjeldahl analysis).

The results obtained are summarized in Table 2.

**Table 2**

| Protein in intestines of rats one hour after intraintestinal administration of maltodextrin, soy protein concentrate, soy protein hydrolysate and Vaminolac (amino acid mixture), 5 rats being used for each test compound | | | | | | |
|---|---|---|---|---|---|---|
| | Dose (g protein) | | | Intestinal protein | | Absorbed |
| Treatment | Given | Found* | Flush sample (g) | g | % of dose | % of dose |
| Maltodextrin | | - | 9.79 | 0.036 | - | |
| Soy protein concentrate | 0.126 | 0.132 | 9.80 | 0.125 | 94.9 (70.6)** | 29.4 |
| Soy protein hydrolysate | 0.165 | 0.164 | 10.78 | 0.078 | 47.7 (25.5)** | 74.5 |
| Vaminolac | 0.169 | 0.170 | 11.48 | 0.079 | 46.2 (25.4)** | 74.6 |

| | | | | | | |
|---|---|---|---|---|---|---|
| *) Protein in 2.5 ml dose formulation | | | | | | |
| **) Percentage corrected for endogenous intestinal protein | | | | | | |

In control animals (maltodextrin) very little protein (0.036 g) was found in the intestine.

In the protein treated rats, the higher amount of intestinal protein was found in the rats given soy protein concentrate (94.9% of the dose) and the lowest in the rats given soy protein hydrolysate (47.7% of the dose) or Vaminolac (46.2% of the dose).

This demonstrates that the hydrolysate and Vaminolac were absorbed considerably faster than the concentrate and that the hydrolysate was absorbed as fast as Vaminolac.

## Claims

1. Method for production of a vegetable protein hydrolyzate, characterized by the fact
1) that a vegetable protein product with at least 65% protein calculated as dry matter and water is mixed to a slurry with a protein content up to about 20%, preferably up to 12%,
2) that the mixture from step 1 ) by means of at least one protease is proteolytically hydrolyzed by means of a non-pH-stat method to a DH of between 15 and 35%,
3) that the hydrolysis is terminated by inactivation of the enzyme(s), and
4) that the mixture from step 3 is separated on an ultrafiltration unit with cut-off value above 5,000, the permeate constituting the protein hydrolyzate.

2. Method according to Claim 1, characterized by the fact that the vegetable protein product is a vegetable protein concentrate.

3. Method according to Claims 1 - 2, characterized by the fact that the vegetable protein product is a vegetable protein isolate.

4. Method according to Claims 1 - 3, characterized by the fact that the vegetable protein is soy, peas or rice protein.

5. Method according to Claims 1 - 4, characterized by the fact that the slurry in step 1) has a protein content of 7-12%.

6. Method according to Claims 1 - 5, characterized by the fact that a heat treatment to a temperature above 60°C is inserted between step 1) and step 2).

7. Method according to Claims 1 - 6, characterized by the fact that the hydrolysis in step 2) is carried out to a DH of between 20-30 and that Alcalase® *(B. licheniformis)* and/or Neutrase® *(B. subtilis)* is used as proteolytic enzyme(s).

8. Method according to Claims 1 - 7, characterized by the fact that the inactivation of the enzyme(s) (step 3)) is carried out by heat treatment.

9. Method according to Claims 1 - 7, characterized by the fact that the inactivation of the enzyme(s) (step 3)) is carried out by acid treatment.

10. Method according to Claims 1 - 9, characterized by the fact that the mixture at the end of step 3) is treated with activated carbon for more than 5 minutes at between 50 and 70°C in an amount corresponding to between 1 and 5% carbon, calculated in relation to dry matter content.

11. Method according to Claims 1 - 10, characterized by the fact that the permeate from step 4) is heated to between 130 and 140°C and immediately thereafter flash cooled to around 75°C and then cooled in a heat exchanger to between 50 and 60°C.

12. Method according to Claims 1 - 11, characterized by the fact that after step 4) a concentration is carried out by nanofiltration at a temperature between 50 and 70°C and/or evaporation, whereafter the retentate is collected as the protein hydrolyzate solution.

13. Method according to Claims 1 - 12, characterized by the fact that the protein hydrolyzate solution from step 4) is spray-dried to a water content below 6.5%.

## Patentansprüche

1. Verfahren zur Herstellung eines pflanzlichen Proteinhydrolysats, dadurch gekennzeichnet,
1) daß ein pflanzliches Proteinprodukt mit mindestens 65% Protein, berechnet als Trockenmasse, und Wasser zu einer Aufschlämmung mit einem Proteingehalt bis zu etwa 20% und vorzugsweise bis zu 12% vermischt werden,
2) daß das Gemisch von Stufe 1) mit Hilfe mindestens einer Protease proteolytisch durch ein Nicht-pH-Stat-Verfahren bis zu einem DH-Wert von 15 bis 35% hydrolysiert wird,
3) daß die Hydrolyse durch Inaktivierung des oder der Enzyme beendet wird und
4) daß das Gemisch von Stufe 3) an einer Ultrafiltrationsanlage mit einer Trenngrenze über 5000 getrennt wird, wobei das Permeat das Proteinhydrolysat darstellt.

2. Verfahren nach Anspruch 1, dadurch gekennzeichnet, daß es sich beim pflanzlichen Proteinprodukt um ein pflanzliches Proteinkonzentrat handelt.

3. Verfahren nach den Ansprüchen 1-2, dadurch gekennzeichnet, daß es sich beim pflanzlichen Proteinprodukt um ein pflanzliches Proteinisolat handelt.

4. Verfahren nach den Ansprüchen 1-3, dadurch gekennzeichnet, daß es sich beim pflanzlichen Protein um Soja-, Erbsen- oder Reisprotein handelt.

5. Verfahren nach den Ansprüchen 1-4, dadurch gekennzeichnet, daß die Aufschlämmung in Stufe 1) einen Proteingehalt von 7-12% aufweist.

6. Verfahren nach den Ansprüchen 1-5, dadurch gekennzeichnet, daß eine Wärmebehandlung bei einer Temperatur über 60°C zwischen der Stufe 1) und der Stufe 2) eingeschoben wird.

7. Verfahren nach den Ansprüchen 1-6, dadurch gekennzeichnet, daß die Hydrolyse in Stufe 2) bei einem DH-Wert von 20-30 durchgeführt wird und daß Alcalase^{R} (B. licheniformis) und/oder Neutrase^{R} (B. subtilis) als proteolytische(s) Enzym(e) zugesetzt werden.

8. Verfahren nach den Ansprüchen 1-7, dadurch gekennzeichnet, daß die Inaktivierung des oder der Enzyme (Stufe 3)) durch eine Wärmebehandlung durchgeführt wird.

9. Verfahren nach den Ansprüchen 1-7, dadurch gekennzeichnet, daß die Inaktivierung des oder der Enzyme (Stufe 3)) durch eine Säurebehandlung durchgeführt wird.

10. Verfahren nach den Ansprüchen 1-9, dadurch gekennzeichnet, daß das Gemisch am Ende von Stufe 3) mehr als 5 Minuten mit Aktivkohle bei 50 bis 70°C in einer Menge, die 1 bis 5% Kohlenstoff, berechnet in bezug auf den Trockenmasseanteil, entspricht, behandelt wird.

11. Verfahren nach den Ansprüchen 1-10, dadurch gekennzeichnet, daß das Permeat von Stufe 4) auf 130 bis 140°C erwärmt und unmittelbar danach einer Entspannungskühlung auf etwa 75°C und sodann einer Abkühlung in einem Wärmetauscher auf 50 bis 60°C unterworfen wird.

12. Verfahren nach den Ansprüchen 1-11, dadurch gekennzeichnet, daß nach der Stufe 4) eine Einengung durch Nanofiltration bei einer Temperatur von 50 bis 70°C und/oder eine Eindampfung vorgenommen wird, wonach das Retentat als Proteinhydrolysatlösung gewonnen wird.

13. Verfahren nach den Ansprüchen 1-12, dadurch gekennzeichnet, daß die Proteinhydrolysatlösung von Stufe 4) auf einen Wassergehalt unter 6,5% sprühgetrocknet wird.

## Revendications

1. Procédé pour la production d'un hydrolysat de protéine végétale, caractérisé en ce que :
1) un produit de protéine végétale avec au moins 65% de protéine calculée en tant que matière sèche et de l'eau sont mélangés à une suspension avec une teneur en protéine allant jusqu'à 20%, de préférence jusqu'à 12%,
2) le mélange de l'étape 1) au moyen d'au moins une protéase est hydrolysé protéolytiquement au moyen d'un procédé à pH non stationnaire à un DH compris entre 15 et 35%,
3) l'hydrolyse est terminée par inactivation de l'enzyme ou des enzymes, et
4) le mélange de l'étape 3) est séparé sur une unité d'ultrafiltration avec une valeur de coupure au-dessus de 5 000, le perméat constituant l'hydrolysat de protéine.

2. Procédé selon la revendication 1, caractérisé en ce que le produit de protéine végétale est un concentré de protéine végétale.

3. Procédé selon les revendications 1-2, caractérisé en ce que le produit de protéine végétale est un produit d'isolation de protéine végétale.

4. Procédé selon les revendications 1 à 3, caractérisé en ce que la protéine végétale est de la protéine de soja, de pois ou de riz.

5. Procédé selon les revendications 1 à 4, caractérisé en ce que la suspension dans l'étape 1) a une teneur en protéine de 7 à 12%.

6. Procédé selon les revendications 1 à 5, caractérisé en ce qu'un traitement thermique à une température supérieure à 60°C est introduit entre l'étape 1) et l'étape 2).

7. Procédé selon les revendications 1 à 6, caractérisé en ce que l'hydrolyse dans l'étape 2) est mise en oeuvre à un DH compris entre 20-30 et en ce que l'Alcalase® (B. licheniformis) et/ou la Neutrase® (B. subtilis) est utilisée comme enzyme ou enzymes protéolytique(s).

8. Procédé selon les revendications 1 à 7, caractérisé en ce que l'inactivation de l'enzyme ou des enzymes (étape 3)) est mise en oeuvre par traitement thermique.

9. Procédé selon les revendications 1 à 7, caractérisé en ce que l'inactivation de l'enzyme ou des enzymes (étape 3) est mise en oeuvre par traitement à l'acide.

10. Procédé selon les revendications 1 à 9, caractérisé en ce que le mélange à la fin de l'étape 3) est traité avec du carbone activé pendant plus de 5 minutes à une température comprise entre 50 et 70°C selon une quantité correspondant à une valeur comprise entre 1 et 5% de carbone, calculée par rapport à la teneur en matière sèche.

11. Procédé selon les revendications 1 à 10, caractérisé en ce que le perméat de l'étape 4) est chauffé entre 130 et 140°C et est immédiatement refroidi par voie éclair par la suite à environ 75°C et est ensuite refroidi dans un échangeur de chaleur entre 50 et 60°C.

12. Procédé selon les revendications 1 à 11, caractérisé en ce que après l'étape 4) une concentration est réalisée par nanofiltration à une température entre 50 et 70°C et/ou évaporation, après quoi le rétentat est recueilli comme la solution d'hydrolysat de protéine.

13. Procédé selon les revendications 1 à 12, caractérisé en ce que la solution d'hydrolysat de protéine de l'étape 4) est séchée par projection à une teneur en eau inférieure à 6,5%.
